# EUROPEAN PATENT SPECIFICATION

(11) **EP 2 551 116 B1**
(45) Date of publication and mention of the grant of the patent: **17.12.2014**
(21) Application number: 12176598.6
(22) Date of filing: 16.07.2012
(51) Int. Cl.: B41J 3/28, B41J 3/50, B41J 11/20, B41J 11/00

(54) **Printing device provided with mechanism for correcting deformation of print medium**
Druckvorrichtung mit einem Mechanismus zur Korrektur von Verformungen des Druckmediums
Dispositif d'impression avec mécanisme de correction de déformation de support d'impression

(30) Priority: 28.07.2011 JP 2011165674
(43) Date of publication of application: 30.01.2013
(73) Proprietor: Fujitsu Frontech Limited, Inagi-shi, Tokyo 206-8555 (JP)
(72) Inventor: Yamazaki, Tsuyoshi, Inagi-shi, Tokyo 206-8555 (JP); Katayama, Kazuhiro, Inagi-shi, Tokyo 206-8555 (JP)
(74) Representative: Stebbing, Timothy Charles

(56) References cited:
- US-A- 5 808 290

## Description

### Background of the Invention

### Field of the Invention

The present invention relates to a printing device which reads and writes magnetic information on a print medium having a magnetic stripe and a print zone and prints print information, and the printing device includes a mechanism for correcting medium deformation such as bending tendency, etc. of a print medium.

### Description of the Related Art

There have conventionally been a passbook printing device, a passbook processing device, a magnetic stripe processing device, etc. for use in, for example, an ATM (automated teller (telling) machine) and having a magnetic head for reading and writing magnetic data using a magnetic stripe of a passbook provided with the magnetic stripe and inserted into a passbook insertion opening, and a printing head for printing an amount on an amount column of the passbook (refer to, for example, patent documents 1, 2, and 3).

The patent document 1 describes providing a passbook printing device capable of performing processing by one device although the position of the magnetic stripe on a passbook varies for each client.

The patent document 1 is configured by a unitary construction of a magnetic head and a printing head, and includes a torque limiter for stabilizing the gap between the printing head and a medium, and a platen for pressing the medium supported by a cam shaft toward the printing head with specified pressure.

The patent document 2 describes providing a passbook processing device capable of automatically correcting the deformation of a passbook, especially the deformation of a bended portion, enhancing the contacting performance between a stripe and a head, and improving the reliability in reading and writing information.

The patent document 2 has a configuration in which a push mechanism having an arm or a cam etc. for pressing a bending portion of a passbook is provided on a passbook conveyance path surface arranged in the other side of a printing head over the passbook, and a step equal to or larger than the thickness of the passbook is made at the position where the bended portion of the passbook to be made at the passbook conveyance path surface.

The patent document 3 describes a magnetic stripe processing device for allowing a magnetic head to contact a magnetic stripe without fail depending on an amount of deformation although there are differences in thickness and paper quality of a passbook and in folding of a bended portion, thereby reducing an erroneous write/read operation on magnetic data by a magnetic head.

The patent document 3 measures the thickness of the passbook using a thickness measuring mechanism, presses the passbook with a push member called an MS guide depending on the measured thickness, stabilize a gap between the passbook and the magnetic head in a constant state, and writes and reads magnetic data using the magnetic head.

The above-mentioned patent documents 1, 2, and 3 press a passbook so that the gap between the passbook and a magnetic head can be placed in a constant state depending on the change in thickness of the passbook when the pages of the passbook are turned and on the change in thickness of the passbook by the folding of a bended portion, thereby write and read magnetic data by the magnetic head.

The relationship between the magnetic stripe, whose magnetic data is read and written by the magnetic head, and the magnetic head is not only fluctuated by the change in thickness of a passbook by the turn of the pages of the passbook and the folding.

The magnetic stripe of a passbook provided with a magnetic stripe is not formed along the bended portion of the passbook, but is formed along the hem of the passbook. However, some clients do not carefully use their own passbooks, and often make folding at the hem of the passbook.

Thus, when a passbook has a magnetic stripe formed along the hem with the folding, the magnetic stripe also has the folding depending on the folding at the hem of the passbook. Therefore, when the passbook is inserted, there occurs a gap between the magnetic stripe and the magnetic head at the position of the folding.

When there occurs a gap between the magnetic stripe and the magnetic head, the read output by reading magnetic data of the magnetic stripe by the magnetic head is degraded, the erroneous read of magnetic data is incurred, the passbook is returned to the client without a printing process on the passbook, and the client has to insert again the passbook.

Since the client generally considers that the problem comes from the fault on the ATM side, it is not preferable that the trouble of inserting again the returned passbook incurs the complaint of the client.

However, although the above-mentioned patent documents 1, 2, and 3 describe the magnetic head capable of corresponding to the change in thickness of the passbook by the turn of the pages of the passbook and the change in thickness of the passbook by the folding of the bended portion, they do not describe the consideration about an erroneous read of the magnetic data due to the gap between the magnetic stripe and the magnetic head made by the folding of the hem.

### [Patent Document]

[Patent Document 1] Japanese Laid-open Patent Publication No. 2002-230626
[Patent Document 2] Japanese Laid-open Patent Publication No. 05-046795
[Patent Document 3] Japanese Laid-open Patent Publication No. 2007-335041

The document US 5 808 290 A discloses a printing device which reads and writes magnetic Information and prints print Information on a book-type recording medium. A dummy head is provided in addition to a magnet head in order to minimise an error occurring during reading and writing magnetic data.

### Summary of the Invention

The present invention has been developed to solve the above-mentioned conventional problem, and aims at providing a method and a printing device using the method for correcting medium deformation using a printing device which reads and writes magnetic information on a print medium such as a document having a magnetic stripe and a print zone and prints print information, and the method corrects the medium deformation such as folding, etc.

To solve the above-mentioned problem, the printing device having the mechanism for correcting medium deformation according to the present invention is configured to read and write magnetic information and prints print information on a print medium in book form having a magnetic stripe and a print zone, and includes: a magnetic data processing unit for reading and writing magnetic data on the magnetic stripe of the print medium; a print processing unit for printing data in the print zone while the printing head is pressing the print medium 11 to the platen; and a control unit. The control unit is adapted to determine that there has occurred deformation of the print medium at the position corresponding to the portion where an erroneous read has occurred when the erroneous read occurs on the magnetic data of the magnetic stripe by the magnetic data processing unit, to perform blank printing by the print processing unit in the print zone at the position corresponding to the portion where an erroneous read has occurred, and to correct the deformation of the print medium by the push of the platen and the printing head on the print medium through the blank printing, thereby reading again the magnetic data on the magnetic stripe by the magnetic data processing unit.

When an erroneous read occurs in reading again the magnetic data, the control unit is adapted to change the position of the print zone, to correct the deformation and further to read the magnetic data. In this case, the control unit further is adapted to repeat correcting the deformation and reading the magnetic stripe processing device several times.

According to the present invention, the printing unit fictionally performs printing on the deformed portion of a medium such as a passbook etc. on which magnetic data cannot be correctly read, corrects the deformation by applying pressure, and then reads magnetic data. Therefore, the correct read rate on the magnetic data can be improved, thereby reducing the passbook rejection rate at which a passbook is rejected and returned to a client. Accordingly, the present invention has an effect of enhancing the level of client satisfaction.

### Brief Description of Drawings

FIG. 1 is a perspective view of the configuration of an important portion of the printing device according to the embodiment 1 of the present invention;
FIG. 2 is a partly omitted side view for explanation of he first spring of a propelling mechanism in the configuration of the important portion of the printing device illustrated in FIG. 1;
FIG. 3 is a block diagram of controlling the printing device illustrated in FIG. 1;
FIG. 4 is a flowchart of the operation of the controlling process performed by the control unit illustrated in FIG. 3; and
FIG. 5 is an example of a practical operation of the print medium deformation correcting process performed by the print processing unit illustrated in FIGS. 1 through 3.

### Description of the Preferred Embodiments

The embodiments of the present invention are described below in detail with reference to the attached drawings.

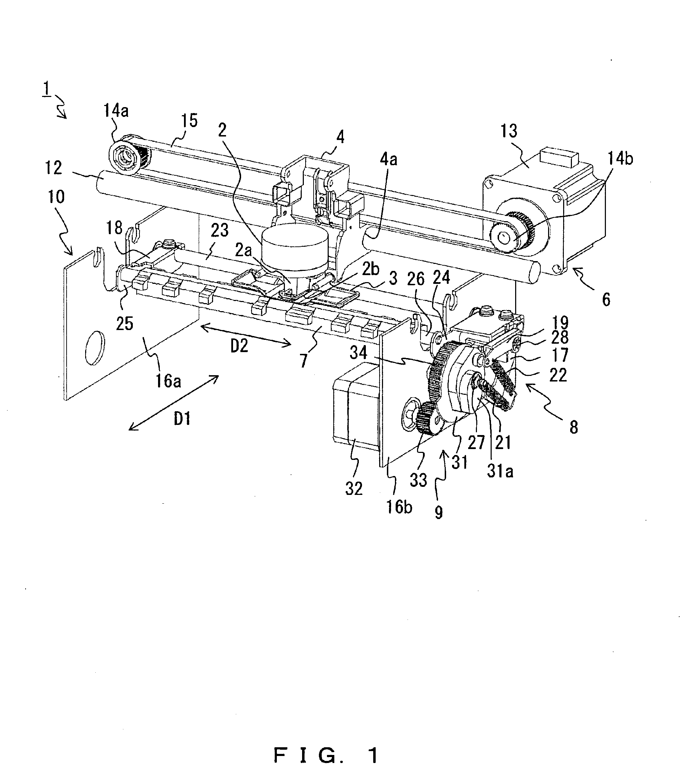

FIG. 1 is a perspective view of the printing device according to the embodiment 1 of the present invention.

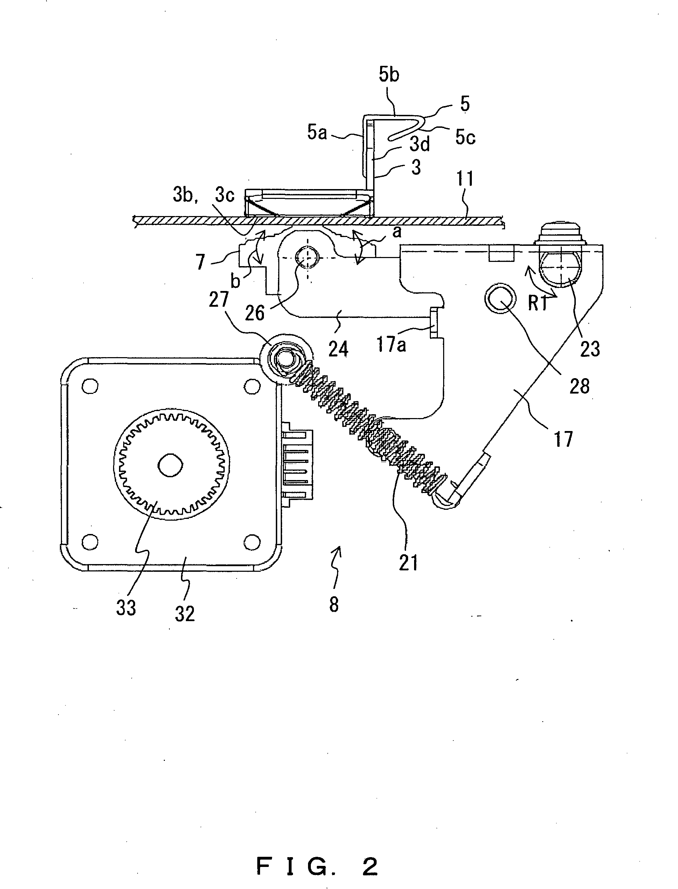

FIG. 2 is a partly omitted side view of the printing device according to the embodiment 1 for explanation of the first spring of the propelling mechanism. In FIG. 2, the same component as in FIG. 1 is assigned the same reference numeral as in FIG. 1.

A printing device 1 includes a printing head 2, a gap guide 3, a carriage 4, a gap adjusting mechanism 5 (refer to FIG. 2), a head moving unit 6, a platen 7, a propelling mechanism 8, a propelling force adjusting mechanism 9, and a frame 10.

As illustrated in FIG. 1, the printing head 2 prints data on a print medium 11 illustrated in FIG. 2 on a printing surface 2b as the bottom surface of a head pin 2a projected downward. The printing device 1 according to the present embodiment is appropriate in using a paper medium as the print medium 11 such as a passbook, a cut sheet, etc., but other printing media can also be available.

For example, The gap guide 3 is made of metal, and interconnected to the printing head 2 and the carriage 4 below the printing head 2. The gap guide 3 takes a plate form longer in a conveyance width direction D2 than in a conveyance direction D1, and takes a substantially rectangular form as viewed above.

Two Plane portions 3b and 3c are formed on the bottom surface of the gap guide 3 as illustrated in FIG. 2. These plane portions 3b and 3c face each other over a printing surface 2b of the printing head 2 illustrated in FIG. 1, and formed on either side of the printing surface 2b of the printing head 2 in the conveyance width direction D2.

The plane portions 3b and 3c are placed at the lower end of the gap guide 3, and encloses the print medium 11 with the platen 7 made of resin of, for example, a kind of rubber. Thus, the gap between the printing head 2 and the print medium 11 is determined based on the position relative to the printing head 2 and the gap guide 3.

For the gap guide 3, a bracket unit 3d is formed from the upper surface of the peripheral hem at the rear portion illustrated in FIG. 1 in the two facing peripheral hems at the central portion in the longitudinal direction of the long plate as illustrated in FIG. 2.

Two coupling holes (not illustrated in the attached drawings) penetrating the bracket unit 3d in the conveyance direction D1 are formed in the bracket unit 3d. The two coupling holes are used with the coupling holes (not illustrated in the attached drawings) of the printing head 2 for coupling with the carriage 4.

An engagement unit (not illustrated in the attached drawings) in which the gap adjusting mechanism 5 is engaged is formed. In the present embodiment, the engagement unit is formed so that it penetrates the bracket unit 3d in the conveyance direction D1 at the central portion in the longitudinal direction of gap guide 3 in plate form at the root of the bracket unit 3d.

The carriage 4 is arranged so that a guide shaft 12 of the frame 10 penetrates two through-holes 4a and 4b (4b is hidden and invisible in the perspective view illustrated in FIG. 1) coaxially formed in the conveyance width direction D2 as illustrated in FIG. 1.

Two coupling pins (not illustrated in the attached drawings) extend in the conveyance direction D1. These two coupling pins are inserted into two coupling holes of the gap guide 3 and two coupling holes of the printing head 2. The printing head 2, the gap guide 3, and the carriage 4 are collectively coupled to one another by applying the coupling screws in the reverse of the insertion direction.

The gap adjusting mechanism 5 is a leaf spring in this embodiment. The lower end of the gap adjusting mechanism 5 is locked at the engagement unit of the bracket unit 3d of the gap guide 3.

The gap adjusting mechanism 5 includes: a perpendicular unit 5a extending perpendicularly upward along the internal circumference of the gap guide 3 from the engagement unit of the bracket unit 3d; a horizontal unit 5b extending horizontally from the upper end of the bracket unit 3d to the carriage 4; and a loopback unit 5c looped back diagonally below and extending up to the portion immediately before the bracket unit 3d.

When the printing head 2, the gap guide 3, and the carriage 4 are collectively interconnected, the loopback unit 5c of the gap adjusting mechanism 5 is pushed up from the bottom of the concavity (not illustrated in the attached drawings) provided inside the carriage 4. Thus, the gap guide 3 is also pushed upward.

Thus, the gap guide 3 touches the printing head 2 perpendicularly in the direction orthogonal to the insertion direction of the coupling screw. Since the gap guide 3 also touches using the coupling screw the printing head 2 in the insertion direction of the coupling screw, it touches the printing head 2 in the two directions orthogonal to each other.

As described above, the gap adjusting mechanism 5 adjusts the gap between the printing surface 2b (printing head 2) of the printing head 2 illustrated in FIG. 1 and the plane portions 3b and 3c (print medium 11) of the gap guide 3 illustrated in FIG.2 into a regulated amount by adjusting the relative positions of the printing head 2 and the gap guide 3 into the regulated positions.

Next, the head moving unit 6 includes a motor 13, a toothed pulley 14 (14a, 14b), and a toothed belt 15. The motor 13 is, for example, a stepping motor, and moves the carriage 4 back and forth in the conveyance width direction D2 along the guide shaft 12 by reciprocally rotating the toothed belt 15 applied between the motor shaft toothed pulley 14b and another toothed pulley 14a.

Thus, the printing head 2 and the gap guide 3 coupled to the carriage 4 also moves back and forth in the conveyance width direction D2, and the printing head 2 performs printing on the print medium 11 illustrated in FIG. 2 conveyed in the conveyance direction conveyance direction D1 with a desired gap reserved between the printing surface 2b as the bottom of a head pin 2a and the print medium 11 by the gap guide 3.

The print medium 11 illustrated in FIG. 2 is arranged so that it can be enclosed between the plane portions 3b and 3c of the gap guide 3 and the platen 7. The platen 7 spans substantially the entire area between two side frames 16 (16b, 16a) of the frame 10 in the conveyance width direction D2 illustrated in FIG. 1.

The platen 7 is made of, for example, rubber type resin, and the gap guide 3 is made of, for example. Therefore, the friction coefficient (dynamic friction coefficient and static friction coefficient) of the plane portions 3b and 3c is lower than the friction coefficient of the portion opposite the plane portions 3b and 3c.

The propelling mechanism 8 illustrated in FIG. 1 propels one (the platen 7 in this embodiment) of the platen 7 and the gap guide 3 in the direction in which the platen 7 and the gap guide 3 become relatively closer to each other, that is, upward.

The propelling mechanism 8 includes a first link 17 illustrated in FIGS. 1 and 2, a second link 18 and a third link 19 illustrated in FIG. 1, a first spring 21 illustrated in FIGS. 1 and 2 and a second spring 22 illustrated in FIG. 1 as a plurality of elastic members.

The first link 17 is provided as rotatable (swinging) indicated by a bidirectional arrow R1 illustrated in FIG. 2 using a fulcrum shaft 23 penetrating the side frame 16b as a rotation shaft. The end portion of a holding plate 24 for holding one end of the platen 7 is fixed to the first link 17.

The second link 18 is provided as rotatable (swinging) using the fulcrum shaft 23 as a rotation shaft. The end portion of a holding plate 25 for holding the other end of the platen 7 is fixed to the second link 18.

Thus, since the both ends of the platen 7 are coupled to the first link 17 and the second link 18 through the holding plates 24 and 25, the platen 7 also rotates using the fulcrum shaft 23 as a rotation shaft through the holding plates 24 and 25 by the first link 17 and the second link 18 rotating using the fulcrum shaft 23 as a rotation shaft.

The rotation angle of the first link 17 and the second link 18 is limited to a specified range, and the platen 7 is arranged at substantially the same level as the fulcrum shaft 23. Practically, although the platen 7 rotates, the platen 7 hardly moves in the conveyance direction D1, and moves as moving vertically.

The platen 7 is held by the holding plates 24 and 25 through the rotation shaft 26 of the platen 7. That is, the platen 7 is fixed to the links 17 and second link 18 through the rotation shaft 26 and the holding plates 24 and 25.

The platen 7 is configured so that it rotates as indicated by the bidirectional arrows a and b illustrated in FIG. 2 using the rotation shaft 26 as a fulcrum. When the thickness of the print medium 11 changes, the links 17 and 18 start a rotating operation using the fulcrum shaft 23 as a fulcrum, and the position of the platen 7 changes in the vertical direction.

The platen 7 is fixed to the first link 17 and the second link 18 through the rotation shaft 26 and the holding plates 24 and 25, and rotates using the rotation shaft 26 as a fulcrum. Therefore, although the platen 7 is pushed against the print medium 11, the upper surface of the platen 7 can be constantly parallel to the plane portions 3b and 3c of the gap guide 3.

The upper end of the first spring 21 is fixed to a stud 27 extending from the outer surface of the side frame 16b in the conveyance width direction D2, and the lower end is fixed to the first link 17.

The first spring 21 is fixed as expanded to be longer than a free length with the platen 7 and the plane portions 3b and 3c of the gap guide 3 enclosing the print medium 11.

Thus, the first spring 21 has pull propelling power to return to the free length. By the pull propelling power, the first link 17 rotates clockwise using the fulcrum shaft 23 illustrated in FIG. 2 as a fulcrum, and raises the platen 7. Thus, the first spring 21 propels the platen 7 in the direction (upward) in which the platen 7 and the gap guide 3 can be closer to each other.

The third link 19 (omitted in FIG. 2) illustrated in FIG. 1 can rotate (swing) using a stud 28 provided as extending outside from the first link 17 in the conveyance width direction D2 at one end side.

The third link 19 is normally locked by a stopper 17a provided for the first link 17. One end of the second spring 22 is fixed to the free end side of the third link 19, and the other end is fixed to the first link 17.

The propelling force adjusting mechanism 9 illustrated in FIG. 1 includes a cam 31, a motor 32 illustrated in FIGS. 1 and 2, and a small diameter gear 33. The cam 31 is fixed to a large diameter gear 34, and the large diameter gear 34 is engaged with the small diameter gear 33.

The motor 32 is formed by, for example, a stepping motor, and drives the small diameter gear 33 to rotate it in the reciprocal directions. Thus, the large diameter gear 34 rotates in the reciprocal directions, and the cam 31 rotates in the reciprocal directions using the stud 27 of the side frame 16b as a fulcrum.

A lever unit 31a is provided for the cam 31. The lever unit 31a pushes up the third link 19 from the position in which it is locked by a stopper 17a by rotating the cam 31 counterclockwise as illustrated in FIG. 1, thereby releasing the lock of the stopper 17a.

When the third link 19 is pushed up, the second spring 22 fixed to the third link 19 is expanded. That is, the pull propelling power occurs in the second spring 22, and the pull propelling power propels the first link 17 so that it rotates clockwise.

Thus, not only the propelling power by the first spring 21, but also the pull propelling power by the second spring 22 is applied to the platen 7. Thus, the propelling force adjusting mechanism 9 moves the second spring 22 as at least one elastic member to the position in which the platen 7 is propelled, and to the position from which it is saved (position where the third link 19 is locked by a stopper 17a).

In addition the propelling power of the second spring 22 to the platen 7 can be adjusted in a plurality of stages by moving the platen 7 to a plurality of positions where it is propelled.

For example, the propelling power of the second spring 22 is not applied when the print medium 11 is a cut sheet (thin medium), small propelling power is additionally obtained by a little expanding the second spring 22 when the print medium 11 is a passbook (except the thick root portion), and the second spring 22 is largely expanded to additionally obtain large propelling power when the print medium 11 is the root portion of the passbook, thereby acquiring optimum propelling power.

Thus, the propelling force adjusting mechanism 9 according to the present embodiment moves at least the second spring 22 as at least one spring in the plurality of springs to the position in which the platen 7 is propelled, and to the position it is saved (position where the third link 19 is locked by the stopper 17a). Thus, the propelling power can be largely changed on the print medium 11 by changing the number of springs for propelling the platen 7 as necessary.

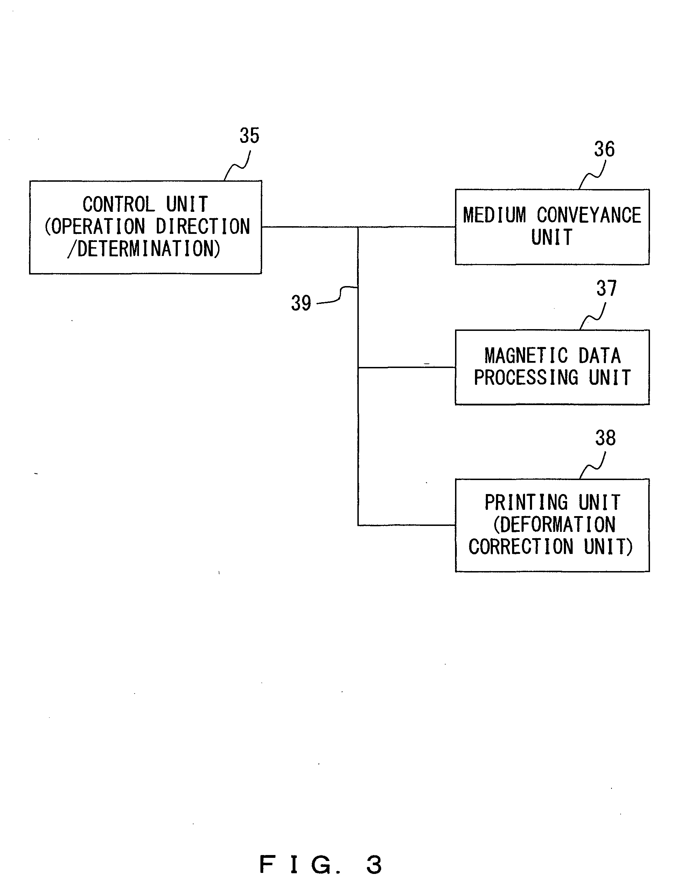

FIG. 3 illustrates the control block of the printing device 1 with the above-mentioned configuration according to the present embodiment. As illustrated in FIG. 3, the control block includes a control unit 35, a medium conveyance unit 36, a magnetic data processing unit 37, and a printing unit 38 interconnected through a bus 39.

The medium conveyance unit 36 is provided with a plurality of roller pairs, a guide unit, a position sensor, etc. omitted in the attached drawings, controls these units, moves back and forth the print medium 11 illustrated in FIG. 2 in the conveyance direction D1 illustrated in FIG. 1, and stops the print medium 11 in a desired position.

A stepping motor is used as a motor which is not illustrated in the attached drawings, but drives the main roller pair for conveying back and forth the print medium 11. The control unit 35 can be constantly informed of the amount of conveyance from the reference position of the print medium 11 according to the drive pulse signal of the stepping motor.

The magnetic data processing unit 37, which is also omitted in FIGS. 1 and 2, has a magnetic head for reading and writing magnetic data on the magnetic stripe added to the reverse of the print surface of the print medium 11, that is, to the cover or the back cover if the medium is a document having a bended portion.

The magnetic data processing unit 37 controls the magnetic head, which is arranged as freely sliding on the conveyance path of the print medium 11 at the position corresponding to the magnetic stripe of the print medium 11 inserted from the print medium insertion opening of the printing device 1 but not illustrated in the attached drawings, so that magnetic data can be read and written on the magnetic stripe of the print medium 11.

The printing unit 38 has the configuration illustrated in FIGS. 1 and 2. The printing unit 38 is conveyed on the conveyance path, and prints specified data such as an amount, a remark, etc. on the print surface of the print medium 11, which stops at a specified position, by the printing surface 2b of the printing head 2.

In addition, although described later in detail, when deformation such as folding, bending, etc. occurs at the position corresponding to the portion to which the magnetic stripe of the print medium 11 is added, and may cause a read or write error of the magnetic data of the magnetic stripe, the printing unit 38 performs a specified fictional printing process and corrects the deformation of the print medium 11.

Although not illustrated in the attached drawings, the control unit 35 is provided in its internal circuit with a storage device such as ROM (read only memory), RAM (random access memory), EEPROM (electrically erasable programmable ROM), etc., and controls each of the above-mentioned units according to the control program stored in the ROM.

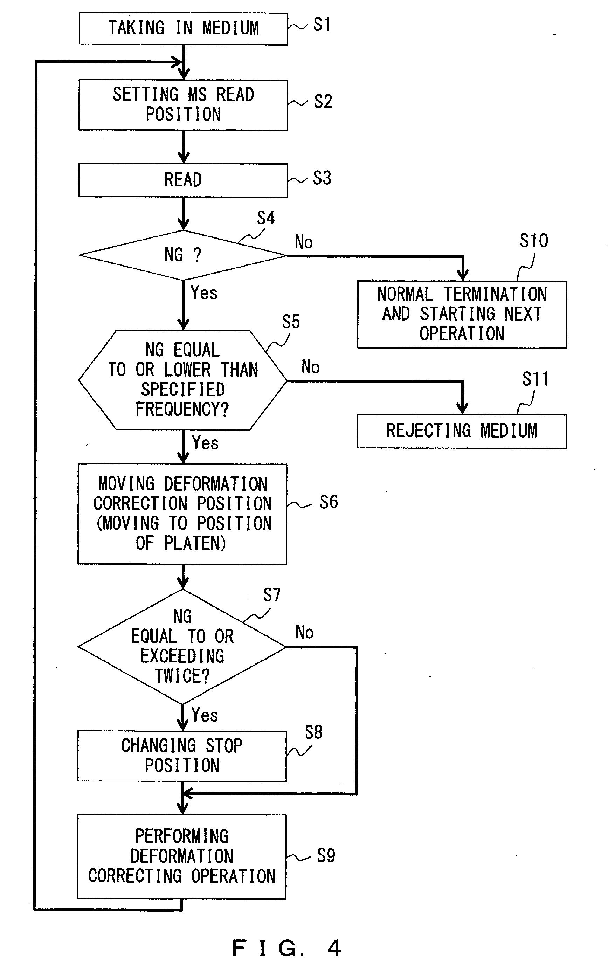

FIG. 4 is a flowchart of the operation of the control process by the control unit 35 illustrated in FIG. 3.

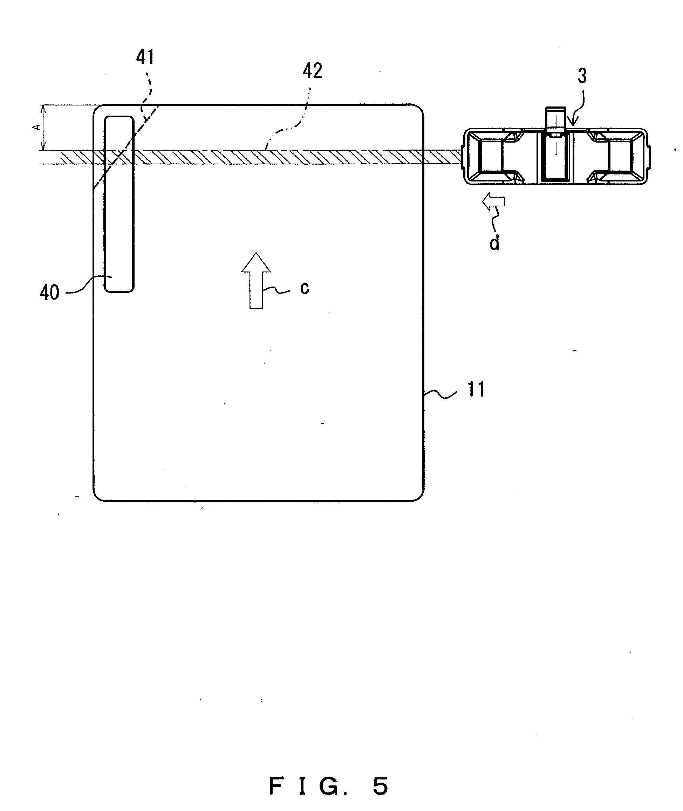

FIG. 5 is an example of a practical operation of the deformation correcting process on the print medium 11 by the printing unit 38 in the operation of the control process illustrated in the flowchart of FIG. 3.

In FIG. 4, the control unit 35 first takes in (receives) the print medium 11 inserted through the print medium insertion opening not illustrated in the attached drawings (step S1).

Then, the control unit 35 stops the received print medium 11, and sets it at the position where the magnetic stripe is read (step S2).

Then, the control unit 35 controls the magnetic head so that the magnetic data can be read on the magnetic stripe of the print medium 11 (step S3).

Then, the control unit 35 determines whether or not the output signal from the magnetic head is not a pulse signal stable with constant intensity, that is, whether or not the signal indicates a erroneous read, that is, NG (step S4).

If the output signal from the magnetic head indicates a successful read (NO as the determination in S4), the control unit 35 determines that the read of the magnetic data on the magnetic stripe has normally terminated, and control is passed to the next operation such as the printing process etc. (step S10)

On the other hand, if there has occurred deformation such as folding, bending, etc. at the position corresponding to the portion to which the magnetic stripe of the print medium 11 is added, there may be an erroneous read of the magnetic data of the magnetic stripe, and the output signal from the magnetic head indicates a erroneous read "NG" (YES as the determination in S4), then control unit 35 further determines whether or not the number of NG is equal to or smaller than the specified number of times (step S5).

In the process, the control unit 35 sets in advance an NG frequency setting area and an NG occurrence flag area in the RAM or the EEPROM, sets in advance an allowable NG frequency n in the NG frequency setting area, sets the value of the NG occurrence flag area as "m", and sets "0" when the print medium 11 is received in step 1.

If NG occurs, the value m in the NG occurrence flag area is incremented by "1", then the value m obtained by incrementing by "1" is compared with the value n set in the NG frequency setting area, and it is determined whether or not m ≤ n.

If m ≤ n (YES as the determination in S5), the control unit 35 controls the medium conveyance unit 36, and moves the print medium 11 from the magnetic stripe read position at which the medium is stopped in the process in step S2 to the deformation correction position (position of the platen in the present embodiment) (step S6).

Next, the control unit 35 determines whether or not the detected NG refers to the second or more (step S7). In this process, it is determined whether or not m ≤ 2, and the value of the frequency n of NG is set to n ≥ 3 in advance.

In the determination above, if m ≥ 2 (YES as the determination in S7), then the control unit 35 changes the stop position (stop portion) in which the platen is moved to the deformation correction position (position of the platen) to the position different from the position at which the platen is stopped at the previous NG (step S8).

Then, the control unit 35 controls the printing unit 38, moves the carriage 4, but does not print data by the printing head 2. That is, fictional processing is performed and the deformation correcting operation is performed (step S9). The fictional processing refers to moving the printing head back and forth without actually performing the printing process while enclosing and pressing the print medium 11 between the printing head 2 and the platen 7.

When it is determined that m ≥ 2 does not hold in the determination in step S7, that is, when the first NG is detected (NO as the determination in S7), the control unit 35 immediately passes control to step S9, and the deformation correcting operation is performed.

Described below is the process illustrated in FIG. 5. FIG. 5 illustrates that deformation 41 such as folding, bending, etc. has occurred at the position corresponding to the portion to which a magnetic stripe 40 of the print medium 11 is added. The deformation 41 refers to the central position of the folding, the bending, etc.

An arrow c indicates the conveyance direction in which the print medium 11 has been moved from the magnetic stripe read position to the deformation correction position (position of the platen). An arrow d indicates the movement direction of the carriage 4, and a pressure line 42 indicates the area where the print medium 11 is pressed by the gap guide 3 and the platen 7 which move together with the carriage 4.

In the present embodiment, the deformation of the print medium 11 is corrected by the printing process on the deformed portion of the print medium 11 by the gap guide 3 and the platen 7 to correctly read the magnetic data of the magnetic stripe 40.

A range A in FIG. 5 indicates an area whose position is to be changed to a different position from the position (the pressure line 42 in FIG. 5) where the platen is stopped at the first NG in the process in step S8 when the fictional processing is performed at the position of the pressure line 42 in FIG. 5, that is, the deformation 41 is not corrected at the first pressure to the print medium 11 by the gap guide 3 and the platen 7, the print medium 11 is conveyed to the magnetic stripe read position in the opposite direction of the arrow c, the magnetic stripe is read again, and an erroneous read occurs again, that is m ≥ 2 holds.

When the deformation correcting operation is performed in step S9, that is, when the pressing process terminates by the gap guide 3 and the platen 7 on the print medium 11, the control unit 35 returns control to step S2, and repeats the process in steps S2 through S9.

Thus, when the magnetic data of the magnetic stripe 40 is correctly read by at least the magnetic head in the plural times (m times) of the deformation correcting process even with the deformation portion of the print medium 11, the determination in step S4 is NO, and the magnetic data on the magnetic stripe 40 can be correctly read.

On the other hand, in the determination in step S5, when the number of occurrences m of NG exceeds a specified allowance n, the control unit 35 controls the medium conveyance unit 36, returns the print medium 11 to the print medium insertion opening, and returns the print medium 11 to the client (step S11).

The setting of the allowance n is empirically made within the range in which the client is satisfied with the entire processing operation time as a waiting time including the deformation correcting operation.

Thus, according to the present embodiment, when the print medium whose magnetic stripe portion is deformed is determined as having an erroneous read of the magnetic stripe, the position of the magnetic stripe set in advance is moved to the platen of the printing unit, the carriage moves the deformation unit of the print medium, and the deformation unit is corrected by the pressure of the gap guide and the platen.

A plurality of positions are set as the stop position of the print medium for correction of a deformed portion, a further larger range of deformation can be corrected. In addition, the movement of the carriage can enhance the correction effect by moving plural number of times the same positions of the deformed portion of the print medium.

Thus, by adding the deformed portion correcting process to a normal printing device, the successful read rate of the magnetic data of the magnetic stripe can be improved although the passbook is deformed, and the passbook rejection rate at which a deformed passbook is returned to the client can be reduced, thereby removing the complaint of the client.

As described above, the present invention can be applied to a printing device having a mechanism for correcting medium deformation which reads and writes magnetic information and prints print information on a print medium such as a document having a magnetic stripe and a print zone, and the device includes a mechanism for correcting medium deformation which corrects a deformation such as folding, etc. of a print medium.

## Claims

1. A printing device (1) having a mechanism for correcting medium deformation which reads and writes magnetic information and prints print information on a print medium (11) in book form having a magnetic stripe (40) and a print zone, comprising:
a magnetic data processing unit (37) reading and writing magnetic data on the magnetic stripe (40) of the print medium (11);
a print processing unit printing data in the print zone while a printing head (2) is pressing the print medium (11) to a platen (7); and
a control unit, wherein
the control unit (35) is adapted to determine that there has occurred deformation (41) of the print medium (11) at a position corresponding to the portion where an erroneous read has occurred when the erroneous read occurs on the magnetic data of the magnetic stripe (40) by the magnetic data processing unit, to perform blank printing by the print processing unit in the print zone at the position corresponding to the portion where an erroneous read has occurred, and to correct the deformation of the print medium (11) by the push of the platen (7) and the printing head (2) on the print medium (11) through the blank printing, thereby reading again the magnetic data on the magnetic stripe (40) by the magnetic data processing unit (37).

2. The printing device according to claim 1, wherein
when reading the magnetic data again and an erroneous read occurs, the control unit is adapted to change the position of the print zone, and to correct the deformation and to read the magnetic data again.

3. The printing device according to claim 2, wherein
the control unit is adapted to repeat correcting the deformation to be further performed and reading the magnetic data a specified number of times.

## Patentansprüche

1. Druckvorrichtung (1) mit einem Mechanismus zur Korrektur einer Medienverformung, die magnetische Informationen liest und schreibt und Druckinformationen auf ein Druckmedium (11) in Buchform mit einem Magnetstreifen (40) und einer Druckzone druckt, umfassend:
eine Magnetdatenverarbeitungseinheit (37), die Magnetdaten auf dem Magnetstreifen (40) des Druckmediums (11) liest und schreibt;
eine Druckverarbeitungseinheit, die Daten in der Druckzone druckt, während ein Druckkopf (2) das Druckmedium (11) an eine Schreibwalze (7) presst; und
eine Steuereinheit, wobei
die Steuereinheit (35) dazu ausgebildet ist zu bestimmen, dass eine Verformung (41) des Druckmediums (11) an einer Position eingetreten ist, die dem Teil entspricht, wo eine fehlerhafte Ablesung erfolgt ist, wenn die fehlerhafte Ablesung an den Magnetdaten des Magnetstreifens (40) durch die Magnetdatenverarbeitungseinheit erfolgt, einen Leerdruck durch die Druckverarbeitungseinheit in der Druckzone an der Position auszuführen, die dem Teil entspricht, wo eine fehlerhafte Ablesung erfolgt ist, und die Verformung des Druckmediums (11) zu korrigieren, indem die Schreibwalze (7) und der Druckkopf (2) auf dem Druckmedium (11) durch den Leerdruck geschoben werden, wodurch die Magnetdaten auf dem Magnetstreifen (40) erneut von der Magnetdatenverarbeitungseinheit (37) gelesen werden.

2. Druckvorrichtung nach Anspruch 1, wobei wenn die Magnetdaten wieder gelesen werden und eine fehlerhafte Ablesung erfolgt, die Steuereinheit dazu ausgebildet ist, die Position der Druckzone zu verändern und die Verformung zu korrigieren und die Magnetdaten erneut zu lesen.

3. Druckvorrichtung nach Anspruch 2, wobei
die Steuereinheit dazu ausgebildet ist, die Korrektur der Verformung zu wiederholen, die weiter ausgeführt wird, und die Magnetdaten in einer festgelegten Anzahl von Ausführungen zu lesen.

## Revendications

1. Dispositif d'impression (1) ayant un mécanisme destiné à corriger une déformation de support qui lit et écrit de l'information magnétique et imprime de l'information d'impression sur un support d'impression (11) en forme de livre ayant une bande magnétique (40) et une zone d'impression, comportant :
une unité de traitement de données magnétiques (37) qui lit et écrit des données magnétiques sur la bande magnétique (40) du support d'impression (11) ;
une unité de traitement d'impression qui imprime des données dans la zone d'impression alors qu'une tête d'impression (2) appuie le support d'impression (11) sur un cylindre d'impression (7) ; et
une unité de commande, dans lequel
l'unité de commande (35) est prévue pour déterminer qu'une déformation (41) du support d'impression (11) s'est produite dans une position correspondant à la partie où une lecture erronée s'est produite quand la lecture erronée se produit sur les données magnétiques de la bande magnétique (40) par l'unité de traitement de données magnétiques, pour réaliser une impression à vide par l'unité de traitement d'impression dans la zone d'impression dans la position correspondant à la partie où une lecture erronée s'est produite, et pour corriger la déformation du support d'impression (11) par la poussée du cylindre d'impression (7) et de la tête d'impression (2) sur le support d'impression (11) par l'intermédiaire de l'impression à vide, en lisant ainsi de nouveau les données magnétiques sur la bande magnétique (40) grâce à l'unité de traitement de données magnétiques (37).

2. Dispositif d'impression selon la revendication 1, dans lequel, quand une lecture erronée se produit en lisant de nouveau les données magnétiques, l'unité de commande est prévue pour changer la position de la zone d'impression, et pour corriger la déformation et pour lire de nouveau les données magnétiques.

3. Dispositif d'impression selon la revendication 2, dans lequel l'unité de commande est prévue pour répéter la correction de la déformation devant être encore réalisée et lire les données magnétiques un nombre de fois spécifique.
